# EUROPEAN PATENT SPECIFICATION

(11) **EP 3 868 139 B1**
(45) Date of publication and mention of the grant of the patent: **24.08.2022**
(21) Application number: 18822266.5
(22) Date of filing: 17.10.2018
(51) Int. Cl.: H04W 4/46, H04W 4/44

(54) **VIRTUAL REPRESENTATION OF NON-CONNECTED VEHICLES IN A VEHICLE-TO-EVERYTHING (V2X) SYSTEM**
VIRTUELLE DARSTELLUNG VON NICHT VERBUNDENEN FAHRZEUGEN IN EINEM VEHICLE-TO-EVERYTHING (V2X)-SYSTEM
REPRÉSENTATION VIRTUELLE DE VÉHICULES NON CONNECTÉS DANS UN SYSTÈME "VÉHICULE VERS TOUT" (V2X)

(43) Date of publication of application: 25.08.2021
(73) Proprietor: Nokia Technologies Oy, 02610 Espoo (FI)
(72) Inventor: SZILAGYI, Peter, 1083 Budapest (HU)
(74) Representative: Nokia EPO representatives
(86) International application number: PCT/EP2018/078459
(87) International publication number: WO 2020/078550

(56) References cited:
- WO-A1-2017/134578
- US-A1- 2017 053 530
- L Le ET AL: "INFRASTRUCTURE-ASSISTED COMMUNICATION FOR CAR-TO-X COMMUNICATION", Proceedings of 18th ITS World Congress and Exhibition 2011, 18 October 2011 (2011-10-18), pages 1-7, XP055261135, http://festag-net.de/publications.html Retrieved from the Internet: URL:http://festag-net.de/doc/2011_ITSEC_LT E_le.pdf [retrieved on 2016-03-29]

## Description

### BACKGROUND

Vehicle-to-vehicle (V2V) and vehicle-to-everything (V2X) communication is a form of device-to-device (D2D) communication that accounts for the characteristics of vehicles such as cars and trucks. For example, V2V or V2X communication can be performed over an interface that is enhanced for vehicular use cases and supports communication between nodes traveling at high relative speeds (up to 250 km/h) and high densities of vehicles (e.g., thousands of nodes). This interface is referred to as a PC5 or side link (SL) interface. Services provided using V2V or V2X communication include vehicle platooning that enables vehicles to dynamically form a platoon traveling together, extended sensors that enable the exchange of raw or processed data among vehicles, roadside units, pedestrian devices, and V2X application servers, advanced driving to enable semi-automated or fully-automated driving, and remote driving that enables a remote driver or a V2X application to operate a remote vehicle.

WO2017/134578 A1 describes a method for supporting direct communication between wireless devices.

The article INFRASTRUCTURE-ASSISTED COMMUNICATION FOR CAR-TO-X COMMUNICATION by L. Le, A. Festag, A. Mäder, R. Baldessari, M. Sakata, T. Tsukahara, M. Kato presents a survey for vehicular communication using a centralized / distributed approach.

US2017/053530 A1 relates to techniques for transmitting vehicle information messages among a plurality of vehicles.

### SUMMARY

The following presents a simplified summary of the disclosed subject matter in order to provide a basic understanding of some aspects of the disclosed subject matter. This summary is not an exhaustive overview of the disclosed subject matter. It is not intended to identify key or critical elements of the disclosed subject matter or to delineate the scope of the disclosed subject matter. Its sole purpose is to present some concepts in a simplified form as a prelude to the more detailed description that is discussed later.

In some embodiments, a method is provided including collecting, at a server, data representing a status of a non-connected vehicle that does not exchange cooperative awareness messages (CAMs) with the server and synthesizing, at the server, values of fields in a CAM for the non-connected vehicle based on the data. The method also includes incorporating, at the server, information in the CAM to indicate that the CAM represents the non-connected vehicle and transmitting, from the server, the CAM to at least one connected vehicle.

Some embodiments of the method include collecting data acquired by at least one of an onboard sensor in the non-connected vehicle, a smart phone associated with the non-connected vehicle, a smart city sensor deployed proximate the non-connected vehicle, or a road sensor deployed proximate the non-connected vehicle.

Some embodiments of the method include determining a position of the non-connected vehicle based on at least one of positioning data acquired from a telecom operator or global positioning System (GPS) data acquired from the onboard sensor or the smart phone.

Some embodiments of the method include determining a speed, a heading, and a direction of the non-connected vehicle based on a derivative of the position of the non-connected vehicle.

Some embodiments of the method include collecting at least one of acceleration or gyroscopic data for the non-connected vehicle, and wherein synthesizing the values of the fields in the CAM comprises determining at least one of an acceleration, a curvature, and a yaw rate based on the at least one of the acceleration or the gyroscopic data.

Some embodiments of the method include setting a flag or a Boolean value to indicate that the CAM represents the non-connected vehicle.

Some embodiments of the method include incorporating information representing an accuracy or precision of the values in the fields of the CAM.

In some embodiments, a method is provided that includes receiving, at a connected vehicle, a cooperative awareness message (CAM) that includes information indicating whether the CAM represents a non-connected vehicle and determining, at the connected vehicle, a degree of uncertainty associated with values of fields in the CAM based on the information. The method also includes selectively taking an action based on the degree of uncertainty.

In some embodiments, the information indicates that the CAM represents the non-connected vehicle.

In some embodiments, the information includes a flag or a Boolean value, and the flag or Boolean value indicates that the CAM represents the non-connected vehicle.

Some embodiments of the method include determining a degree of uncertainty for the values of the fields in the CAM for the non-connected vehicle that is higher than a degree of uncertainty for values of fields in a CAM for a connected vehicle.

In some embodiments, the higher degree of uncertainty for the values of the fields in the CAM for the non-connected vehicle indicates higher degrees of uncertainty for at least one of a location, a speed, a heading, a direction, a heading, an acceleration, a curvature, or a yaw of the non-connected vehicle.

Some embodiments of the method include determining the degree of uncertainty based on information in the CAM that represents an accuracy or precision of the values in the fields of the CAM.

Some embodiments of the method include modifying behavior of the connected vehicle based on the degree of uncertainty for the values of the fields in the CAM for the non-connected vehicle.

In some embodiments, an apparatus is provided that includes a receiver that collects data that represents a status of a non-connected vehicle that does not exchange cooperative awareness messages (CAMs) and a processor configured to synthesize values of fields in a CAM for the non-connected vehicle based on the data and incorporate information in the CAM to indicate that the CAM represents the non-connected vehicle. The apparatus also includes a transmitter configured to transmit the CAM to at least one connected vehicle.

Some embodiments of the receiver are configured to collect data acquired by at least one of an onboard sensor in the non-connected vehicle, a smart phone associated with the non-connected vehicle, a smart city sensor deployed proximate the non-connected vehicle, or a road sensor deployed proximate the non-connected vehicle.

Some embodiments of the processor are configured to determine a position of the non-connected vehicle based on at least one of positioning data acquired from a telecom operator or global positioning System (GPS) data acquired from the onboard sensor or the smart phone.

Some embodiments of the processor are configured to determine a speed, a heading, and a direction of the non-connected vehicle based on a derivative of the position of the non-connected vehicle.

Some embodiments of the receiver are configured to collect at least one of acceleration or gyroscopic data for the non-connected vehicle, and some embodiments of the processor are configured to determine at least one of an acceleration, a curvature, and a yaw rate based on the at least one of the acceleration or the gyroscopic data.

Some embodiments of the processor are configured to set a flag or a Boolean value in the CAM to indicate that the CAM represents the non-connected vehicle.

Some embodiments of the processor are configured to incorporate information representing an accuracy or precision of the values in the fields of the CAM.

In some embodiments, an apparatus is provided that includes a receiver configured to receive a cooperative awareness message (CAM) that includes information indicating whether the CAM represents a non-connected vehicle. The apparatus also includes a processor configured to determine a degree of uncertainty associated with values of fields in the CAM based on the information and selectively take an action based on the degree of uncertainty.

In some embodiments, the information indicates that the CAM represents the non-connected vehicle.

In some embodiments, the information includes a flag or a Boolean value, and wherein the flag or Boolean value indicates that the CAM represents the non-connected vehicle.

Some embodiments of the processor are configured to determine a degree of uncertainty for the values of the fields in the CAM for the non-connected vehicle that is higher than a degree of uncertainty for values of fields in a CAM for a connected vehicle.

In some embodiments, the higher degree of uncertainty for the values of the fields in the CAM for the non-connected vehicle indicate higher degrees of uncertainty for at least one of a location, a speed, a heading, a direction, a heading, an acceleration, a curvature, or a yaw of the non-connected vehicle.

Some embodiments of the processor are configured to determine the degree of uncertainty based on information in the CAM that represents an accuracy or precision of the values in the fields of the CAM.

Some embodiments of the apparatus are implemented in a connected vehicle, and some embodiments of the processor are configured to modify behavior of the connected vehicle based on the higher degree of uncertainty for the values of the fields in the CAM for the non-connected vehicle.

In some embodiments, an apparatus is provided including at least one processor and at least one memory including computer program code. The at least one memory and the computer program code are configured to, with the at least one processor, cause the apparatus at least to perform collecting data that represents a status of a non-connected vehicle that does not exchange cooperative awareness messages (CAMs), synthesizing values of fields in a CAM for the non-connected vehicle based on the data, incorporating information in the CAM to indicate that the CAM represents the non-connected vehicle, and transmitting the CAM to at least one connected vehicle

Some embodiments of the apparatus include the at least one memory and the computer program code configured to, with the at least one processor, cause the apparatus at least to perform collecting data acquired by at least one of an onboard sensor in the non-connected vehicle, a smart phone associated with the non-connected vehicle, a smart city sensor deployed proximate the non-connected vehicle, or a road sensor deployed proximate the non-connected vehicle.

Some embodiments of the apparatus include the at least one memory and the computer program code configured to, with the at least one processor, cause the apparatus at least to perform determining a position of the non-connected vehicle based on at least one of positioning data acquired from a telecom operator or global positioning System (GPS) data acquired from the onboard sensor or the smart phone.

Some embodiments of the apparatus include the at least one memory and the computer program code configured to, with the at least one processor, cause the apparatus at least to perform determining a speed, a heading, and a direction of the non-connected vehicle based on a derivative of the position of the non-connected vehicle.

Some embodiments of the apparatus include the at least one memory and the computer program code configured to, with the at least one processor, cause the apparatus at least to perform collecting at least one of acceleration or gyroscopic data for the non-connected vehicle, and wherein synthesizing the values of the fields in the CAM comprises determining at least one of an acceleration, a curvature, and a yaw rate based on the at least one of the acceleration or the gyroscopic data.

Some embodiments of the apparatus include the at least one memory and the computer program code configured to, with the at least one processor, cause the apparatus at least to perform setting a flag or a Boolean value to indicate that the CAM represents the non-connected vehicle.

Some embodiments of the apparatus include the at least one memory and the computer program code configured to, with the at least one processor, cause the apparatus at least to perform incorporating information representing an accuracy or precision of the values in the fields of the CAM.

In some embodiments, an apparatus is provided including at least one processor and at least one memory including computer program code. The at least one memory and the computer program code are configured to, with the at least one processor, cause the apparatus at least to perform receiving a cooperative awareness message (CAM) that includes information indicating whether the CAM represents a non-connected vehicle, determining a degree of uncertainty associated with values of fields in the CAM based on the information, and selectively taking an action based on the degree of uncertainty.

Some embodiments of the apparatus include the at least one memory and the computer program code configured to, with the at least one processor, cause the apparatus at least to perform receiving a CAM that includes information indicating that the CAM represents the non-connected vehicle.

Some embodiments of the apparatus include the at least one memory and the computer program code configured to, with the at least one processor, cause the apparatus at least to perform receiving a CAM that includes a flag or a Boolean value, and the flag or Boolean value indicates that the CAM represents the non-connected vehicle.

Some embodiments of the apparatus include the at least one memory and the computer program code configured to, with the at least one processor, cause the apparatus at least to perform determining a degree of uncertainty for the values of the fields in the CAM for the non-connected vehicle that is higher than a degree of uncertainty for values of fields in a CAM for a connected vehicle.

Some embodiments of the apparatus include the at least one memory and the computer program code configured to, with the at least one processor, cause the apparatus at least to perform determining a higher degree of uncertainty for the values of the fields in the CAM for the non-connected vehicle, the higher degree of uncertainty indicating higher degrees of uncertainty for at least one of a location, a speed, a heading, a direction, a heading, an acceleration, a curvature, or a yaw of the non-connected vehicle.

Some embodiments of the apparatus include the at least one memory and the computer program code configured to, with the at least one processor, cause the apparatus at least to perform determining the degree of uncertainty based on information in the CAM that represents an accuracy or precision of the values in the fields of the CAM.

Some embodiments of the apparatus include the at least one memory and the computer program code configured to, with the at least one processor, cause the apparatus at least to perform modifying behavior of the connected vehicle based on the degree of uncertainty for the values of the fields in the CAM for the non-connected vehicle.

In some embodiments, an apparatus is provided including means for collecting, at a server, data representing a status of a non-connected vehicle that does not exchange cooperative awareness messages (CAMs) with the server and means for synthesizing, at the server, values of fields in a CAM for the non-connected vehicle based on the data. The method also includes means for incorporating, at the server, information in the CAM to indicate that the CAM represents the non-connected vehicle and transmitting, from the server, the CAM to at least one connected vehicle.

Some embodiments of the apparatus include means for collecting data acquired by at least one of an onboard sensor in the non-connected vehicle, a smart phone associated with the non-connected vehicle, a smart city sensor deployed proximate the non-connected vehicle, or a road sensor deployed proximate the non-connected vehicle.

Some embodiments of the apparatus include means for determining a position of the non-connected vehicle based on at least one of positioning data acquired from a telecom operator or global positioning System (GPS) data acquired from the onboard sensor or the smart phone.

Some embodiments of the apparatus include means for determining a speed, a heading, and a direction of the non-connected vehicle based on a derivative of the position of the non-connected vehicle.

Some embodiments of the apparatus include means for collecting at least one of acceleration or gyroscopic data for the non-connected vehicle and means for synthesizing the values of the fields in the CAM comprises determining at least one of an acceleration, a curvature, and a yaw rate based on the at least one of the acceleration or the gyroscopic data.

Some embodiments of the apparatus include means for setting a flag or a Boolean value to indicate that the CAM represents the non-connected vehicle.

Some embodiments of the apparatus include means for incorporating information representing an accuracy or precision of the values in the fields of the CAM.

In some embodiments, an apparatus is provided that includes means for receiving, at a connected vehicle, a cooperative awareness message (CAM) that includes information indicating whether the CAM represents a non-connected vehicle and determining, at the connected vehicle, a degree of uncertainty associated with values of fields in the CAM based on the information. The apparatus also includes means for selectively taking an action based on the degree of uncertainty.

In some embodiments, the information indicates that the CAM represents the non-connected vehicle.

In some embodiments, the information includes a flag or a Boolean value, and the flag or Boolean value indicates that the CAM represents the non-connected vehicle.

Some embodiments of the apparatus include means for determining a degree of uncertainty for the values of the fields in the CAM for the non-connected vehicle that is higher than a degree of uncertainty for values of fields in a CAM for a connected vehicle.

In some embodiments, the higher degree of uncertainty for the values of the fields in the CAM for the non-connected vehicle indicates higher degrees of uncertainty for at least one of a location, a speed, a heading, a direction, a heading, an acceleration, a curvature, or a yaw of the non-connected vehicle.

Some embodiments of the apparatus include means for determining the degree of uncertainty based on information in the CAM that represents an accuracy or precision of the values in the fields of the CAM.

Some embodiments of the apparatus include means for modifying behavior of the connected vehicle based on the degree of uncertainty for the values of the fields in the CAM for the non-connected vehicle.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 illustrates a traffic intersection that includes vehicles and pedestrians that are traveling on streets according to some embodiments.
FIG. 2 is a block diagram of a communication system according to some embodiments.
FIG. 3 is a block diagram of a cooperative awareness message (CAM) that includes information indicating whether the CAM is generated by a connected vehicle or represents a non-connected vehicle according to some embodiments.
FIG. 4 is a flow diagram of a method of generating and transmitting CAM that represent a non-connected vehicle according to some embodiments.
FIG. 5 is a flow diagram of a method of selectively taking an action at a connected vehicle based on whether a CAM is generated by another connected vehicle or represents a non-connected vehicle according to some embodiments.
FIG. 6 is a block diagram of a communication system that includes a V2X server in communication with one or connected vehicles according to some embodiments.

### DETAILED DESCRIPTION

The European Telecommunications Standards Institute (ETSI) specifies a cooperative awareness basic service for V2X communication that enables intelligent transportation systems (ITS, e.g., connected vehicles) to exchange basic status information with each other in real time by transmitting and receiving cooperative awareness messages (CAMs). A CAM includes a basic container that indicates a type of the originating vehicle and the latest geographic position of the originating vehicle. The basic container is typically transmitted at a relatively low frequency such as one per second. A high-frequency container includes dynamic information including heading, speed, drive direction, vehicle length and width, longitudinal acceleration, curvature, curvature calculation mode, and yaw rate. The high-frequency container is typically transmitted at relatively high frequency such as up to ten per second. A network server receives the CAM and distributes the CAM to connected vehicles at frequencies ranging from one CAM per 100 milliseconds (ms) to one CAM per second.

Connected vehicles include various sensors that detect the presence of other connected vehicles, as well as non-connected vehicles and other road participants, that are visible along an unobstructed line of sight (LOS) from the connected vehicle. Connected vehicles also detect the presence of other connected vehicles that are not visible along an unobstructed LOS based on CAMs that are received from the network server. However, connected vehicles are not able to detect the presence of non-connected vehicles or other road participants that are not visible along an unobstructed LOS because the non-connected vehicles do not provide CAMs to the network server. Connected and non-connected vehicles therefore present a significant hazard to each other when they share the roadway, which they are expected to do for the foreseeable future. In some cases, information that characterizes the non-connected vehicles is collected from other sources including smart city sensors, road sensors, cameras, positioning and data usage collected from user equipment on the non-connected vehicle, onboard device sensors, and the like. This information can be used to synthesize a CAM for the non-connected vehicle and the synthesized CAM can be distributed to connected vehicles. However, connected vehicles have no way of distinguishing a real CAM from a synthesized CAM, which may be significantly less accurate than a real CAM depending on the data that was used to generate the synthesized CAM.

Coordination of connected and non-connected vehicles is facilitated by collecting, at a network server, data that represents a status of a non-connected vehicle. Examples of the data include positioning data acquired by an onboard sensor or a smart phone, images generated by cameras in the neighborhood of the non-connected vehicle, smart city sensors, road sensors, and the like. The network server then synthesizes values of the fields in a CAM for the non-connected vehicle based on the acquired data. In some embodiments, the network server determines a position of the non-connected vehicle using positioning data from a telecom operator or global positioning system (GPS) data acquired from an onboard sensor or smart phone. The network server determines a speed, a heading, and a direction based on a derivative of the position. The network server can also determine acceleration, curvature, and a yaw rate using acceleration or gyroscope data, if available. The network server populates the values of the fields in the synthesized CAM. The network server also incorporates additional information in the synthesized CAM to indicate that the synthesized CAM represents a non-connected vehicle. In some embodiments, the additional information is a flag or Boolean value that indicates whether the CAM represents a connected or non-connected vehicle. The additional information can also include information representing an accuracy or precision of values in the fields of the CAM.

Connected vehicles distinguish between a CAM received from a connected vehicle or a synthesized CAM from a non-connected vehicle based on the additional information. Some embodiments of connected vehicles use the additional information in a synthesized CAM to determine whether to take action, transmit an alert, or modify other behaviors of, or decisions taken by, the connected vehicle. For example, if the synthesized CAM indicates that a non-connected vehicle is approaching a blind intersection at a low speed, a connected vehicle that receives the first synthesized CAM may proceed normally if the additional information indicates that the low speed is known with high accuracy. However, the connected vehicle may proceed with caution if the additional information indicates that the low speed is known with low accuracy. The connected vehicle also modifies its behavior based on expected uncertainties in a speed, a direction, a heading, an acceleration, a curvature, or a yaw indicated by values in the fields of a synthesized CAM.

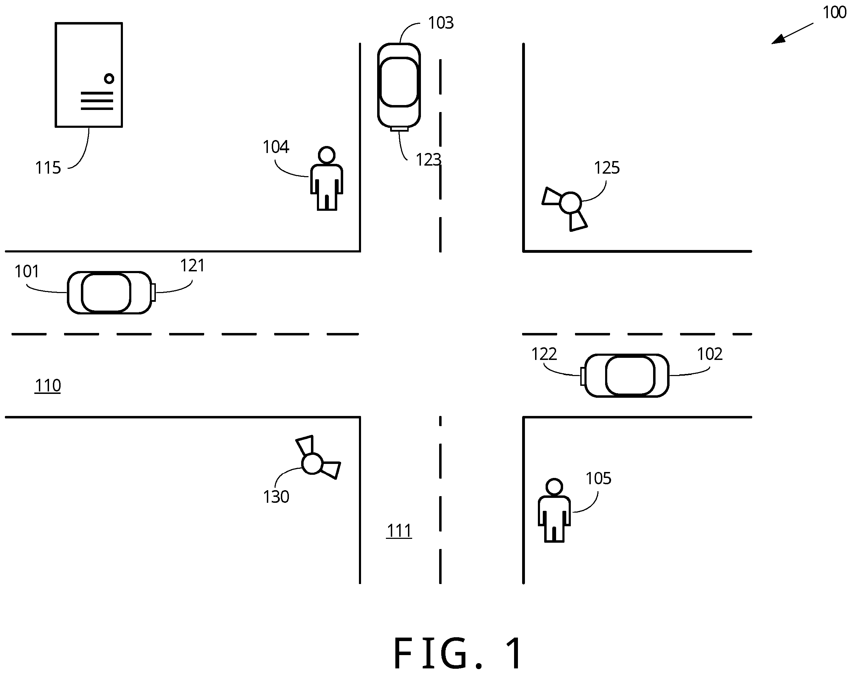

FIG. 1 illustrates a traffic intersection 100 that includes vehicles 101, 102, 103 and pedestrians 104, 105 that are traveling on streets 110, 111 according to some embodiments. The vehicles 101, 102 are connected vehicles. As used herein, the term "connected vehicle" refers to a vehicle that operates as an intelligent transportation system (ITS) according to the cooperative awareness basic service for V2X communication specified by ETSI standards. Connected vehicles exchange basic status information with each other in real time by transmitting and receiving CAM. Connected vehicles also exchange basic status information with a V2X server such as the server 115, as discussed in detail herein. The connected vehicles 101, 102 exchange CAM with each other and with the server 115 over wireless or wired connections, which are not shown in FIG. 1 in the interest of clarity.

The vehicle 103 is a non-connected vehicle. As used herein, the term "non-connected vehicle" refers to a vehicle that does not operate according to the cooperative awareness basic service and does not exchange CAM with the other vehicles 101, 102 or the server 115. The pedestrians 104, 105 are also unable to exchange CAM with the other vehicles 101, 102 or the server 115. The pedestrians 104, 105 can therefore be treated as non-connected vehicles. Although not shown in FIG. 1, bicycles, motorcycles, scooters, skateboarders, and the like are also treated as non-connected vehicles in some embodiments. In some cases, the vehicle 103 or the pedestrians 104, 105 are not visible along a direct line of sight from the connected vehicles 101, 102, which makes it difficult or impossible for the connected vehicles 101, 102 to identify or locate the vehicle 103 or the pedestrians 104, 105.

The vehicles 101, 102 include corresponding sensors 121, 122 that collect information that characterize the state of the vehicles 101, 102. Some embodiments of the vehicle 103 also include sensors 123. Examples of sensors 121-123 include, but are not limited to, global positioning System (GPS) sensors, accelerometers, gyroscopes, cameras, infrared sensors, and the like. The connected vehicles 101, 102 use the information acquired from the sensors 121, 122 to generate information that characterizes the vehicles 101, 102. The information is used to populate fields in CAM that are exchanged by the vehicles 101, 102 and the server 115. Examples of fields in the CAM include information indicating a type of the vehicles 101, 102, the latest or current geographic position of the vehicles 101, 102, and high-frequency dynamic information that characterizes the vehicles 101, 102. Examples of the high-frequency dynamic information include a heading and heading accuracy of the vehicle with regard to true north, driving speed and speed accuracy of the vehicle, drive direction (forward or backward), vehicle length, vehicle width, vehicle longitudinal acceleration in the center of mass of the empty vehicle, vehicle current curve radius and the turning direction of the car with regard to the driving direction, a curvature calculation mode represented by a flag indicating whether the vehicle yaw rate is used in the calculation of the curvature of the vehicle, a yaw rate that denotes the vehicle rotation around the center of mass of the empty vehicle with a leading sign that indicates the direction of rotation (negative for clockwise motion when viewed from the top of the vehicle), and the like.

The server 115 receives and distributes V2X messages including the CAM received from the vehicles 101, 102. Some embodiments of the server 115 receive the CAM using wireless uplink connections via cellular LTE/5G access with user equipment implemented in the connected vehicles 101, 102. The server 115 determines a list of user equipment (which includes one or more of the connected vehicles 101, 102, as well as other connected vehicles) that should receive the CAMs. The server 115 determines the list based on information including the proximity, locations, and mutual distance of the vehicles 101, 102, which is available in the CAM received from the corresponding vehicles 101, 102. The server 115 distributes the CAM to the user equipment indicated in the list using wireless downlink connections via LTE/5G access. The server 115 does not receive CAM or other V2X messages from the non-connected vehicle 103.

The server 115 also collects information that characterizes the status of the non-connected vehicle 103 and, in some cases, the pedestrians 104, 105. Sensors 125, 130 are deployed proximate the intersection 100 between the streets 110, 111. In some embodiments, the sensors 125, 130 include smart city sensors, road sensors, cameras, video recognition systems, radar, lidar, infrared sensors, and the like. The sensors 125, 130 gather information that characterizes the vehicles 101-103 and, in some cases, the pedestrians 104, 105. For example, positions of the vehicle 103 or the pedestrians 104, 105 can be determined by analyzing visual image streams from cameras implemented in the sensors 125, 130. The sensors 125, 130 provide the required information associated with the vehicles 101-103 or the pedestrians 104, 105 to the server 115. Some embodiments of the server 115 also acquire additional information about the non-connected vehicle 103 or the pedestrians 104, 105 from other sources. For example, the server 115 can acquire telco positioning data or GPS data from the vehicle 103 such as data acquired using an onboard sensor or a smart phone in the vehicle 103. The telco positioning data is generated by the telco network using information that indicates the location of the phone. Trajectory, speed, and motion analytics are applied to the location information to determine that the phone is on board the vehicle 103. Additionally, motion sensors in the phone are accessed to derive more precise indications that the phone is in the vehicle 103.

The server 115 generates one or more CAM for the non-connected vehicle 103 and, in some cases the pedestrians 104, 105, using the acquired data. Some embodiments of the server 115 synthesize values of fields in a CAM for the non-connected vehicle 103 based on the data. In order to allow the connected vehicles 101, 102 to distinguish between CAM generated by other connected vehicles (which are likely to be more accurate) and CAMs that are synthesized for the non-connected vehicle 103 (which are likely to be less accurate), the CAM includes a field that indicates whether the CAM was generated by a connected vehicle or synthesized by the server 115. Thus, the server 115 incorporates information into the synthesized CAMP to indicate that the synthesized CAM represents a non-connected vehicle. The server 115 then transmits the synthesized CAMP to one or connected vehicles, which can include the connected vehicles 101, 102.

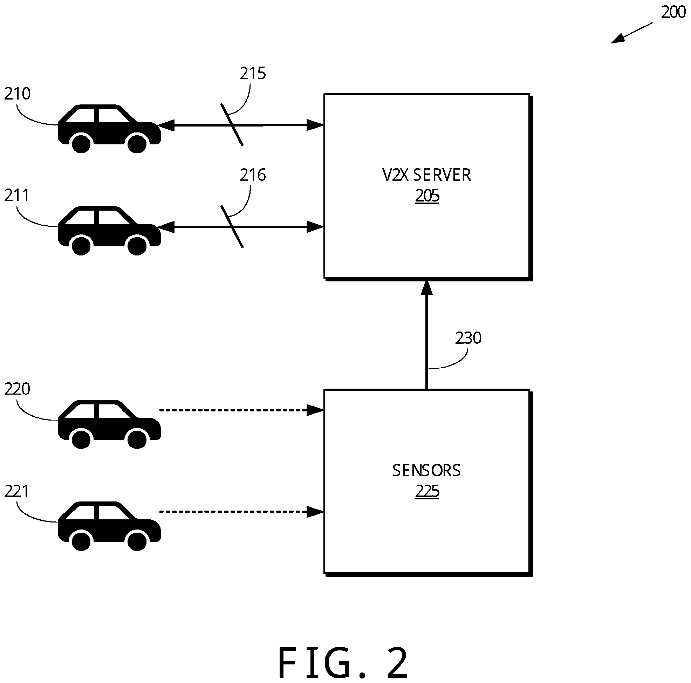

FIG. 2 is a block diagram of a communication system 200 according to some embodiments. The communication system 200 includes a V2X server 205 that communicates with connected vehicles 210, 211 over corresponding interfaces 215, 216. The connected vehicles 210, 211 provide CAM to the V2X server 205 over the interface is 215, 216. The V2X server 205 then distributes the CAM to the connected vehicle 210, 211, as well as other connected vehicles that are proximate the connected vehicles 210, 211. The communication system 200 also includes non-connected vehicles 220, 221 that do not generate or receive CAM, nor do the non-connected vehicles 220, 221 maintain interfaces with the V2X server 205.

Sensors 225 gather information that characterizes the non-connected vehicles 220, 221. Although the sensors 225 are illustrated as a single block that is external to the non-connected vehicles 220, 221, some embodiments of the sensors 225 include sensors that are on board one or more of the non-connected vehicles 220, 221. Examples of the sensors 225 include, but are not limited to, cameras to generate multi-angle pictures, sensors used to generate telco positioning data, sensors in onboard mobile devices, sensors in user equipment that are permanently or temporarily installed or present in the non-connected vehicles 220, 221, and the like. Sensor data can also include positioning or data usage information provided by a telco operator.

The V2X server 205 collects the sensor data via indirect channels 230 including wired or wireless connections between the sensors 225 and the V2X server 205. Some embodiments of the V2X server 205 collect data that is used to identify the position of the non-connected vehicles 220, 221. Examples of position data include, but are not limited to, telco positioning data or GPS data connected from the vehicle using an onboard sensor or smart phone. Frequently, at least one passenger in the non-connected vehicles 220, 221 are carrying a smart phone. The telco network uses positioning information (e.g., 5G positioning data) to access or determine a location of the smart phone and apply trajectory, speed, or motion analytics to determine that the smart phone is associated with the non-connected vehicles 220, 221. Moreover, motion sensors implemented in the smart phone (or other device) can be accessed to derive more precise indications that the phone is in one of the non-connected vehicles 220, 221.

Some embodiments of the V2X server 205 analyze image streams provided by road cameras to infer the location of one or more of the non-connected vehicles 220, 221. Some embodiments of the V2X server 205 combine or correlate multiple data sources to improve the position accuracy. The V2X server 205 can also compare locations of the non-connected vehicles 220, 221 to locations of the connected vehicles 210, 211. For example, if an image of a roadway indicates that one of the non-connected vehicles 220, 221 is located between the connected vehicles 210, 211, the location of the non-connected vehicle can be inferred with a high degree of accuracy from image analysis.

Speeds, headings, and directions of the non-connected vehicles 220, 221 are determined by observing how locations of the non-connected vehicles 220, 221 change over time, e.g., using a derivative of positions of the non-connected vehicles 220, 221. Some embodiments of the V2X server 205 use onboard vehicle sensor data to collect additional information regarding the speeds of the non-connected vehicles 220, 221. For example, speed information can be collected directly from an odometer or a smart phone's internal GPS speed measurements.

Some embodiments of the V2X server 205 determine an acceleration, a curvature, or a yaw rate for a non-connected vehicle using acceleration or gyroscope data that are provided by a smart phone or other device implemented in one of the non-connected vehicles 220, 221. In order to collect onboard sensor data or smart phone sensor data, some embodiments of the V2X server 205 support interfaces to the corresponding onboard sensors or smart phones. For example, a smart phone can run an application that collects acceleration or gyroscopic sensor data. The application then transfers the collected data to the network via a special APN that is forwarded to the V2X server 205. Onboard sensors in the non-connected vehicles 220, 221 can be accessed via an OBD-II interface, e.g., using a Bluetooth OBD-II reader.

Some embodiments of the V2X server 205 also collect additional data associated with the non-connected vehicles 220, 221, such as road sensor data, camera data, map data, and other external information. Sources for the sensor data can include smart city or "Internet of Things" platforms. Mapping information is also widely available from numerous proprietary and open source providers.

The V2X server 205 synthesizes one or more CAM for the non-connected vehicles 220, 221 based on the collected data. Thus, the V2X server 205 acts as a virtual persona for the non-connected vehicles 220, 221 by generating and sending V2X messages on behalf of the non-connected vehicles 220, 221. The connected vehicles 210, 211 are therefore provided with information identifying the road participants (e.g., connected and non-connected) that are proximate the connected vehicles 210, 211 via the same standardized V2X messages. The CAM for the non-connected vehicles 220, 221 are generated at a predetermined frequency, e.g., within a range of 1-10 per second.

Some embodiments of the CAM that are synthesized for the non-connected vehicles 220, 221 include a basic container and a high-frequency container. The basic container indicates the type of the originating non-connected vehicle and the position of the non-connected vehicle. The basic container also includes information indicating that the messages a virtual representation of one of the non-connected vehicles 220, 221. Some embodiments of the synthesized CAM include an additional single type with the semantic "non-connected vehicle." For example, the ETSI TS 102 894-2 standard can be extended with a new DE_StationType value, e.g., "non-connected (254)". Some embodiments of the synthesized CAM include a Boolean type to indicate whether the CAM is from a connected vehicle or as a virtual representation of a non-connected vehicle. For example, a new information element (DE_VirtualStation) of Boolean type can be defined in the CAM. A "true" value indicates that the CAM was generated for a non-connected vehicle. A "false" value (or the absence of the Boolean information element) indicates that the CAM is generated by a connected vehicle.

Including information indicating whether the CAM is generated by a connected vehicle or is a virtual representation of a non-connected vehicle allows the virtual presence technique disclosed herein to be applied to other road participants such as pedestrians, bicyclists, motorbikes, and the like.

The connected vehicles 210, 211 benefit from the techniques disclosed herein because the connected vehicles 210, 211 are not required to collect and analyze multiple data sources to determine the presence or state of the non-connected vehicles 220, 221. Moreover, the V2X server 205 collects more data, redundant data, and sometimes more accurate information than could be collected by the individual connected vehicles 210, 211. For example, even if all the sensors available in the connected vehicles 210, 211 are used to identify non-connected vehicles 220, 221, vehicles outside the line of sight would not be detected, nor would vehicles outside the range of the sensors implemented in the connected vehicles 210, 211. In contrast, the V2X server 205 is able to identify non-connected vehicles 220, 221 using multiple cameras that view the roadway from different angles and other sources of information such as telco data, GPS positioning data, mobile device sensor data, and the like.

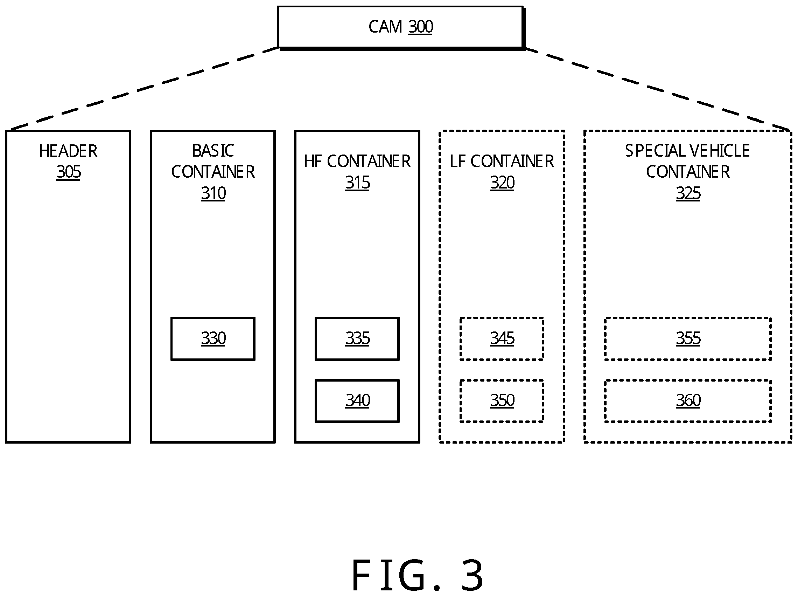

FIG. 3 is a block diagram of a CAM 300 that includes information indicating whether the CAM 300 is generated by a connected vehicle or represents a non-connected vehicle according to some embodiments. The CAM 300 includes a header 305, a basic container 310, a high-frequency container 315, and, optionally, a low-frequency container 320 or a special vehicle container 325. Some embodiments of the CAM 300 are formed in accordance with the Cooperative Awareness Basic Service for V2X that is standardized by ETSI EN 302 637-2, which is incorporated herein by reference in its entirety. This standard does not define any representation for non-connected vehicles. In the illustrated embodiment, the header 305 is an ITS packet data unit (PDU) header formed in accordance with the ETSI standard.

The basic container 310 includes information elements that represent a type of the vehicle associated with the CAM 300 and the latest or most current geographic position of the vehicle associated with the CAM 300. The basic container 310 also includes an information element 330 that indicates whether the CAM 300 is generated by a connected vehicle or is a representation of a non-connected vehicle that is generated by a server such as the server 115 shown in FIG. 1 or the V2X server 205 shown in FIG. 2. Some embodiments of the information element 330 are implemented as a flag or a Boolean value that indicates whether the CAM 300 represents a non-connected vehicle. For example, the flag can be set to indicate a non-connected vehicle or unset to indicate a connected vehicle. For another example, a Boolean value of "true" can indicate a non-connected vehicle and a Boolean value of "false" can indicate a connected vehicle.

The high-frequency container 315 includes a vehicle high-frequency container 335 and, in some cases, other containers 340. Some embodiments of the vehicle high-frequency container 335 include the information elements for the corresponding vehicle:
- heading - heading and heading accuracy of the vehicle movement of the originating vehicle with regards to the true north
- speed - driving speed and speed accuracy of the originating vehicle
- drive direction - forward or backward
- vehicle length
- vehicle width
- longitudinal acceleration - vehicle longitudinal acceleration of the originating vehicle in the center of the mass of the empty vehicle
- curvature - vehicle current curve radius and the turning direction of the curve with regards to the driving direction
- curvature calculation mode - flag indicating whether vehicle yaw rate is used in the calculation of the curvature of the vehicle
- yaw rate - denotes the vehicle rotation around the center of mass of the empty vehicle. The leading sign denotes the direction of rotation. The value is negative if the motion is clockwise when viewing from the top

Values in the above information elements are used to characterize the corresponding vehicle.

The (optional) low-frequency container 320 includes a vehicle low-frequency container 345, as well as one or more other containers 350. The (optional) special vehicle container 325 includes a public transport container 355, a special transport container 360, and possibly one or other containers.

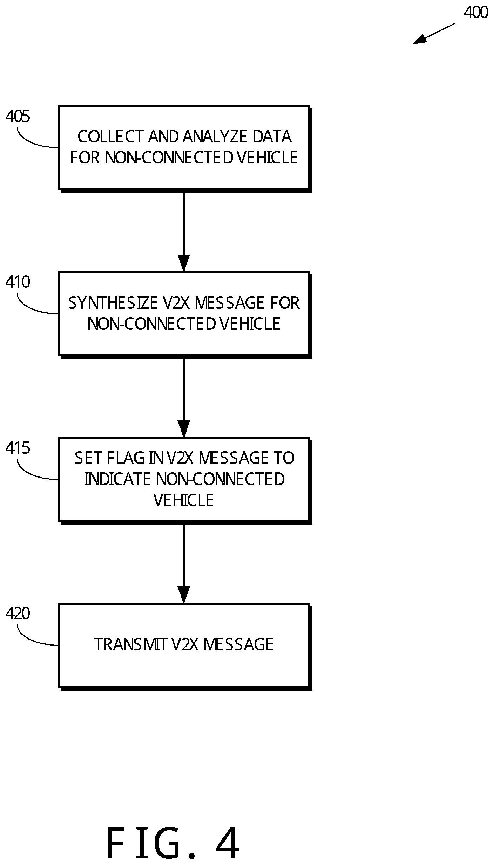

FIG. 4 is a flow diagram of a method 400 of generating and transmitting CAM that represent a non-connected vehicle according to some embodiments. The method is implemented a server including some embodiments of the server 115 shown in FIG. 1 and the V2X server 205 shown in FIG. 2.

At block 405, the server collects and analyzes data for a non-connected vehicle such as the vehicle 103 shown in FIG. 1 or the vehicles 220, 221 shown in FIG. 2. Examples of the data sources and the data collected by the server are disclosed herein.

At block 410, the server synthesizes a V2X message for the non-connected vehicle based on the collected data. In some embodiments, the server synthesizes a CAM and populates the fields of the CAM using information derived from the collected data, as discussed herein.

At block 415, the server sets a flag in the V2X message to indicate that the V2X message represents a non-connected vehicle. In some embodiments, a flag in a CAM is set to indicate that the CAM represents the non-connected vehicle. However, some embodiments of the server use other types of information to indicate whether the CAM is generated by a connected vehicle or represents a non-connected vehicle.

At block 420, the server transmits the V2X message to one or connected vehicles. In some embodiments, the connected vehicles are indicated in a list that is generated based on proximities or locations of the connected vehicles.

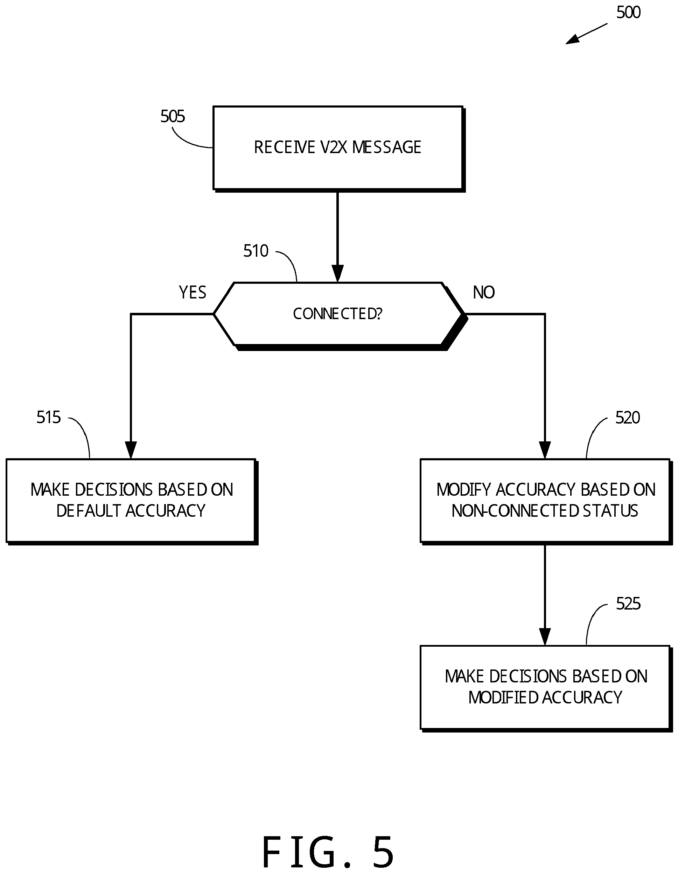

FIG. 5 is a flow diagram of a method 500 of selectively taking an action at a connected vehicle based on whether a CAM is generated by another connected vehicle or represents a non-connected vehicle according to some embodiments. The method is implemented a server including some embodiments of the connected vehicles 101, 102 shown in FIG. 1 and the connected vehicles 210, 211 shown in FIG. 2.

At block 505, the connected vehicle receives a V2X message such as a CAM generated by another connected vehicle for by a server to represent a non-connected vehicle. The V2X message includes information indicating whether the V2X message was generated by another connected vehicle or the V2X message represents a non-connected vehicle. As discussed herein, the accuracy of the information in the V2X message can be lower if the V2X message represents a non-connected vehicle.

At decision block 510, the connected vehicle determines whether the V2X message represents a connected or non-connected vehicle. If the V2X message represents a connected vehicle, the method 500 flows to block 515 and the connected vehicle makes decisions (e.g., speed up or slow down, proceed through intersection, change lanes, and the like) assuming a default accuracy for the information in the V2X message. In some cases, the V2X message includes information indicating accuracy of the information in the V2X message, in which case the connected vehicle takes account of the indicated accuracy. If the V2X message represents a non-connected vehicle, the method 500 flows to block 520.

At block 520, the connected vehicle modifies an accuracy that is applied to the information in the V2X message in response to determining that the V2X message represents a non-connected vehicle. In some embodiments, the modified vehicle reduces the assumed accuracy of the information in the V2X message. In some cases, the V2X message includes information indicating accuracy of the information in the V2X message, in which case the connected vehicle takes account of the indicated accuracy of the information that characterizes the non-connected vehicle.

At block 525, the connected vehicle makes decisions based on the modified accuracy of the information in the V2X message. For example, the connected vehicle can apply larger safety margins to decisions that are taken based on the V2X message that represents a non-connected vehicle.

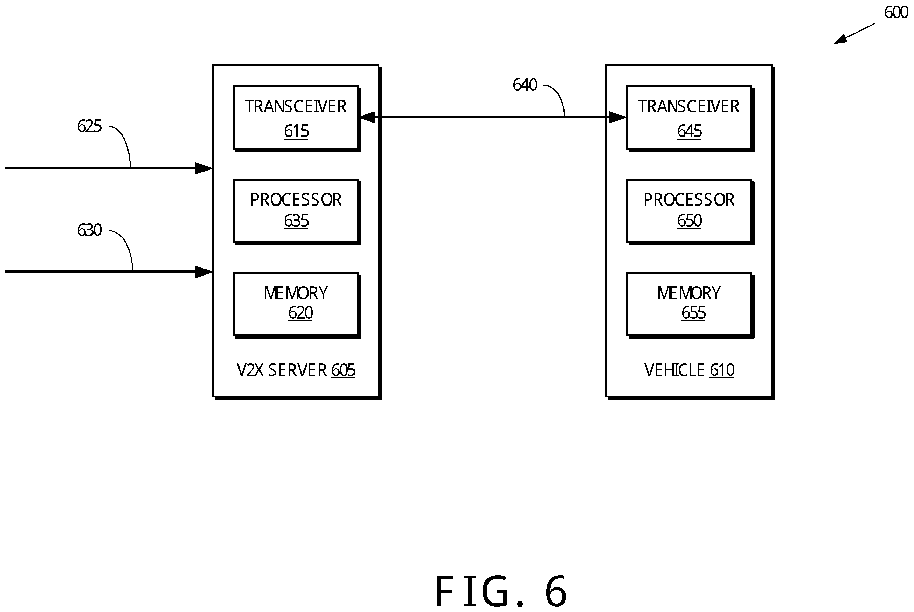

FIG. 6 is a block diagram of a communication system 600 that includes a V2X server 605 in communication with one or connected vehicles 610 according to some embodiments. The V2X server 605 is used to implement some embodiments of the server 115 shown in FIG. 1 and the V2X server 205 shown in FIG. 2. The V2X server 605 includes a transceiver 615 that may transmit or receive messages such as CAM, as discussed herein. The V2X server 605 includes memory 620 for storing information such as processor instructions, data for transmission, received data 625 from other connected vehicles, received data 630 associated with non-connected vehicles, and the like. A processor 635 is used to process information for transmission, process received information, or perform other operations as discussed herein, e.g., by executing instructions stored in the memory 620.

The V2X server 605 communicate with the connected vehicle 610 over an interface 640. The V2X server 605 and the connected vehicle 610 are therefore able to exchange V2X messages such as CAM over the interface 640. The connected vehicle 610 includes a transceiver 645 that may transmit or receive messages such as CAM, as discussed herein. The connected vehicle 610 includes memory 650 for storing information such as processor instructions, data for transmission, CAM received from the V2X server 605, and the like. A processor 655 is used to process information for transmission, process received information, or perform other operations as discussed herein, e.g., by executing instructions stored in the memory 650.

In some embodiments, certain aspects of the techniques described above may implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc , magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

As used herein, the term "circuitry" may refer to one or more or all of the following:
a) hardware-only circuit implementations (such as implementations and only analog and/or digital circuitry) and
b) combinations of hardware circuits and software, such as (as applicable):
   (i) a combination of analog and/or digital hardware circuit(s) with software/firmware and
   (ii) any portions of a hardware processor(s) with software (including digital signal processor(s), software, and memory(ies) that work together to cause an apparatus, such as a mobile phone or server, to perform various functions) and
c) hardware circuit(s) and/or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. A method comprising:
collecting (405), at a server (205, 605), data representing a status of a non-connected vehicle (220, 221) that does not exchange cooperative awareness messages, CAMs, with the server;
synthesizing (410), at the server (205, 605), values of fields in a CAM for the non-connected vehicle (220, 221) based on the data;
incorporating (415), at the server (205, 605), information in the CAM to indicate that the CAM represents the non-connected vehicle (220, 221); and
transmitting (420), from the server (205, 605), the CAM to at least one connected vehicle (210, 211, 610).

2. A method comprising:
receiving, at a connected vehicle (210, 211, 610), a cooperative awareness message, CAM, that includes information indicating whether the CAM represents a non-connected vehicle (220, 221);
determining, at the connected vehicle (210, 211, 610), a degree of uncertainty associated with values of fields in the CAM based on the information; and
selectively taking an action based on the degree of uncertainty.

3. An apparatus (205, 605) comprising:
a receiver that collects data that represents a status of a non-connected vehicle (220, 221) that does not exchange cooperative awareness messages, CAMs;
a processor configured to synthesize values of fields in a CAM for the non-connected vehicle (220, 221) based on the data and incorporate information in the CAM to indicate that the CAM represents the non-connected vehicle (220, 221); and
a transmitter configured to transmit the CAM to at least one connected vehicle (220, 221).

4. The apparatus (205, 605) of claim 3, wherein the receiver is configured to collect data acquired by at least one of an onboard sensor in the non-connected vehicle, a smart phone associated with the non-connected vehicle, a smart city sensor deployed proximate the non-connected vehicle, or a road sensor deployed proximate the non-connected vehicle.

5. The apparatus (205, 605) of any of the preceding claims, wherein the processor is configured to determine a position of the non-connected vehicle based on at least one of positioning data acquired from a telecom operator or global positioning System, GPS data acquired from the onboard sensor or the smart phone.

6. The apparatus (205, 605) of any of the preceding claims, wherein the processor is configured to determine a speed, a heading, and a direction of the non-connected vehicle based on a derivative of the position of the non-connected vehicle.

7. The apparatus (205, 605) of any of the preceding claims, wherein the receiver is configured to collect at least one of acceleration or gyroscopic data for the non-connected vehicle, and wherein the processor is configured to determine at least one of an acceleration, a curvature, and a yaw rate based on the at least one of the acceleration or the gyroscopic data.

8. The apparatus (205, 605) of any of the preceding claims, wherein the processor is configured to set a flag or a Boolean value in the CAM to indicate that the CAM represents the non-connected vehicle.

9. An apparatus comprising:
a receiver (645) configured to receive a cooperative awareness message, CAM, that includes information indicating whether the CAM represents a non-connected vehicle (220, 221); and
a processor (655) configured to determine a degree of uncertainty associated with values of fields in the CAM based on the information and selectively take an action based on the degree of uncertainty.

10. The apparatus of claim 9, wherein the information indicates that the CAM represents the non-connected vehicle (220, 221).

11. The apparatus of any of the preceding claims, wherein the information includes a flag or a Boolean value, and wherein the flag or Boolean value indicates that the CAM represents the non-connected vehicle (220, 221).

12. The apparatus of any of the preceding claims, wherein the processor is configured to determine a degree of uncertainty for the values of the fields in the CAM for the non-connected vehicle that is higher than a degree of uncertainty for values of fields in a CAM for a connected vehicle (210, 211, 610).

13. The apparatus of any of the preceding claims, wherein the higher degree of uncertainty for the values of the fields in the CAM for the non-connected vehicle (220, 221) indicate higher degrees of uncertainty for at least one of a location, a speed, a heading, a direction, a heading, an acceleration, a curvature, or a yaw of the non-connected vehicle (220, 221).

14. The apparatus of any of the preceding claims, wherein the processor (655) is configured to determine the degree of uncertainty based on information in the CAM that represents an accuracy or precision of the values in the fields of the CAM.

15. The apparatus of any of the preceding claims, wherein the apparatus is implemented in a connected vehicle (210, 211, 610), and wherein the processor (655) is configured to modify behavior of the connected vehicle (210, 211, 610) based on the higher degree of uncertainty for the values of the fields in the CAM for the non-connected vehicle (220, 221).

## Patentansprüche

1. Verfahren, das Folgendes umfasst:
Sammeln (405) von Daten, die einen Status eines nicht verbundenen Fahrzeugs (220, 221) repräsentieren, das keine kooperativen Bewusstseinsnachrichten, CAMs, mit einem Server austauscht, am Server (205, 605);
Synthetisieren (410) von Werten von Feldern in einer CAM für das nicht verbundene Fahrzeug (220, 221) am Server (205, 605) auf Basis der Daten;
Einbinden (415) von Informationen in die CAM am Server (205, 605), um anzuzeigen, dass die CAM das nicht verbundene Fahrzeug (220, 221) repräsentiert; und
Übertragen (420) der CAM vom Server (205, 605) zu mindestens einem verbundenen Fahrzeug (210, 211, 610).

2. Verfahren, das Folgendes umfasst:
Empfangen einer kooperativen Bewusstseinsnachricht, CAM, an einem verbundenen Fahrzeug (210, 211, 610), die Informationen beinhaltet, die anzeigen, ob die CAM ein nicht verbundenes Fahrzeug (220, 221) repräsentiert;
Bestimmen eines Grades der Unsicherheit, der mit Werten von Feldern in der CAM verknüpft ist, am verbundenen Fahrzeug (210, 211, 610) auf Basis der Informationen und
selektives Ergreifen einer Maßnahme auf Basis des Grades der Unsicherheit.

3. Vorrichtung (205, 605), die Folgendes umfasst:
einen Empfänger, der Daten sammelt, die einen Status eines nicht verbundenen Fahrzeugs (220, 221) repräsentieren, das keine kooperativen Bewusstseinsnachrichten, CAMs, austauscht;
einen Prozessor, der dazu ausgelegt ist, Werte von Feldern in einer CAM für das nicht verbundene Fahrzeug (220, 221) auf Basis der Daten zu synthetisieren und Informationen in die CAM einzubinden, die anzeigen, dass die CAM das nicht verbundene Fahrzeug (220, 221) repräsentiert; und
einen Sender, der dazu ausgelegt ist, die CAM zu mindestens einem verbundenen Fahrzeug (220, 221) zu übertragen.

4. Vorrichtung (205, 605) nach Anspruch 3, wobei der Empfänger dazu ausgelegt ist, Daten zu sammeln, die von mindestens einem von einem Bordsensor im nicht verbundenen Fahrzeug, einem Smartphone, das mit dem nicht verbundenen Fahrzeug verknüpft ist, einem intelligenten Stadtsensor, der in der Nähe des nicht verbundenen Fahrzeugs eingesetzt ist, oder einem Straßensensor, der in der Nähe des nicht verbundenen Fahrzeugs eingesetzt ist, erfasst werden.

5. Vorrichtung (205, 605) nach einem der vorhergehenden Ansprüche, wobei der Prozessor dazu ausgelegt ist, eine Position des nicht verbundenen Fahrzeugs auf Basis von mindestens einem von Positionsbestimmungsdaten, die von einem Telekommunikationsbetreiber erfasst werden, oder von globalen Positionsbestimmungssystem(GPS)-Daten, die vom Bordsensor oder vom Smartphone erfasst werden, zu bestimmen.

6. Vorrichtung (205, 605) nach einem der vorhergehenden Ansprüche, wobei der Prozessor dazu ausgelegt ist, eine Geschwindigkeit, einen Kurs und eine Richtung des nicht verbundenen Fahrzeugs auf Basis einer Ableitung der Position des nicht verbundenen Fahrzeugs zu bestimmen.

7. Vorrichtung (205, 605) nach einem der vorhergehenden Ansprüche, wobei der Empfänger dazu ausgelegt ist, mindestens eines von Beschleunigungs- oder Gyroskopdaten für das nicht verbundene Fahrzeug zu sammeln, und wobei der Prozessor dazu ausgelegt ist, mindestens eines von einer Beschleunigung, einer Kurvenposition und einer Gierrate auf Basis des mindestens einen der Beschleunigungs- oder der Gyroskopdaten zu bestimmen.

8. Vorrichtung (205, 605) nach einem der vorhergehenden Ansprüche, wobei der Prozessor dazu ausgelegt ist, einen Marker oder einen booleschen Wert in der CAM einzustellen, um anzuzeigen, dass die CAM das nicht verbundene Fahrzeug repräsentiert.

9. Vorrichtung, die Folgendes umfasst:
einen Empfänger (645), der dazu ausgelegt ist, eine kooperative Bewusstseinsnachricht, CAM, zu empfangen, die Informationen beinhaltet, die anzeigen, ob die CAM ein nicht verbundenes Fahrzeug (220, 221) repräsentiert; und
einen Prozessor (655), der dazu ausgelegt ist, einen Grad der Unsicherheit, der mit Werten von Feldern in der CAM verknüpft ist, auf Basis der Informationen zu bestimmen und auf Basis des Grades der Unsicherheit eine Maßnahme zu ergreifen.

10. Vorrichtung nach Anspruch 9, wobei die Informationen anzeigen, dass die CAM das nicht verbundene Fahrzeug (220, 221) repräsentiert.

11. Vorrichtung nach einem der vorhergehenden Ansprüche, wobei die Informationen einen Marker oder einen booleschen Wert beinhalten und wobei der Marker oder der boolesche Wert anzeigt, dass die CAM das nicht verbundene Fahrzeug (220, 221) repräsentiert.

12. Vorrichtung nach einem der vorhergehenden Ansprüche, wobei der Prozessor dazu ausgelegt ist, für die Werte der Felder in der CAM für das nicht verbundene Fahrzeug einen Grad der Unsicherheit zu bestimmen, der höher ist als ein Grad der Unsicherheit für Werte von Feldern in einer CAM für ein verbundenes Fahrzeug (210, 211, 610).

13. Vorrichtung nach einem der vorhergehenden Ansprüche, wobei der höhere Grad der Unsicherheit für die Werte der Felder in der CAM für das nicht verbundene Fahrzeug (220, 221) höhere Grade der Unsicherheit für mindestens eines von einem Standort, einer Geschwindigkeit, einem Kurs, einer Richtung, einem Kurs, einer Beschleunigung, einer Kurvenposition oder eines Gierens des nicht verbundenen Fahrzeugs (220, 221) anzeigt.

14. Vorrichtung nach einem der vorhergehenden Ansprüche, wobei der Prozessor (655) dazu ausgelegt ist, den Grad der Unsicherheit auf Basis von Informationen in der CAM zu bestimmen, die eine Genauigkeit oder Präzision der Werte in den Feldern der CAM repräsentieren.

15. Vorrichtung nach einem der vorhergehenden Ansprüche, wobei die Vorrichtung in einem verbundenen Fahrzeug (210, 211, 610) implementiert ist und wobei der Prozessor (655) dazu ausgelegt ist, ein Verhalten des verbundenen Fahrzeugs (210, 211, 610) auf Basis des höheren Grades der Unsicherheit für die Werte der Felder in der CAM für das nicht verbundene Fahrzeug (220, 221) zu modifizieren.

## Revendications

1. Procédé comprenant :
la collecte (405), au niveau d'un serveur (205, 605), de données représentant un état d'un véhicule non connecté (220, 221) qui n'échange pas de messages de sensibilisation coopérative, CAM, avec le serveur ;
la synthèse (410), au niveau du serveur (205, 605), de valeurs de champs dans un CAM pour le véhicule non connecté (220, 221) sur la base des données ;
l'incorporation (415), au niveau du serveur (205, 605), d'informations dans le CAM pour indiquer que le CAM représente le véhicule non connecté (220, 221) ; et
l'émission (420), à partir du serveur (205, 605), du CAM vers au moins un véhicule connecté (210, 211, 610).

2. Procédé comprenant :
la réception, au niveau d'un véhicule connecté (210, 211, 610), d'un message de sensibilisation coopérative, CAM, qui inclut des informations indiquant si le CAM représente un véhicule non connecté (220, 221) ;
la détermination, au niveau du véhicule connecté (210, 211, 610), d'un degré d'incertitude associé à des valeurs de champs dans le CAM sur la base des informations ; et
l'entreprise, de manière sélective, d'une action sur la base du degré d'incertitude.

3. Appareil (205, 605) comprenant :
un récepteur qui collecte des données qui représentent un état d'un véhicule non connecté (220, 221) qui n'échange pas de messages de sensibilisation coopérative, CAM ;
un processeur configuré pour synthétiser des valeurs de champs dans un CAM pour le véhicule non connecté (220, 221) sur la base des données et incorporer des informations dans le CAM pour indiquer que le CAM représente le véhicule non connecté (220, 221) ; et
un émetteur configuré pour émettre le CAM vers au moins un véhicule connecté (220, 221).

4. Appareil (205, 605) selon la revendication 3, dans lequel le récepteur est configuré pour collecter des données acquises par au moins l'un parmi un capteur embarqué dans le véhicule non connecté, un téléphone intelligent associé au véhicule non connecté, un capteur de ville intelligente déployé à proximité du véhicule non connecté, ou un capteur routier déployé à proximité du véhicule non connecté.

5. Appareil (205, 605) selon l'une quelconque des revendications précédentes, dans lequel le processeur est configuré pour déterminer une position du véhicule non connecté sur la base d'au moins l'un parmi des données de positionnement acquises auprès d'un opérateur de télécommunication ou des données de système mondial de positionnement, GPS, acquises auprès du capteur embarqué ou du téléphone intelligent.

6. Appareil (205, 605) selon l'une quelconque des revendications précédentes, dans lequel le processeur est configuré pour déterminer une vitesse, un cap et une direction du véhicule non connecté sur la base d'une dérivée de la position du véhicule non connecté.

7. Appareil (205, 605) selon l'une quelconque des revendications précédentes, dans lequel le récepteur est configuré pour collecter au moins l'une parmi l'accélération ou des données gyroscopiques pour le véhicule non connecté, et dans lequel le processeur est configuré pour déterminer au moins l'une parmi une accélération, une courbure et un taux de lacet sur la base de la au moins une parmi l'accélération ou les données gyroscopiques.

8. Appareil (205, 605) selon l'une quelconque des revendications précédentes, dans lequel le processeur est configuré pour placer un drapeau ou une valeur booléenne dans le CAM pour indiquer que le CAM représente le véhicule non connecté.

9. Appareil comprenant :
un récepteur (645) configuré pour recevoir un message de sensibilisation coopérative, CAM, qui inclut des informations indiquant si le CAM représente un véhicule non connecté (220, 221) ; et
un processeur (655) configuré pour déterminer un degré d'incertitude associé à des valeurs de champs dans le CAM sur la base des informations et entreprendre, de manière sélective, une action sur la base du degré d'incertitude.

10. Appareil selon la revendication 9, dans lequel les informations indiquent que le CAM représente le véhicule non connecté (220, 221).

11. Appareil selon l'une quelconque des revendications précédentes, dans lequel les informations incluent un drapeau ou une valeur booléenne, et dans lequel le drapeau ou la valeur booléenne indique que le CAM représente le véhicule non connecté (220, 221).

12. Appareil selon l'une quelconque des revendications précédentes, dans lequel le processeur est configuré pour déterminer un degré d'incertitude pour les valeurs des champs dans le CAM pour le véhicule non connecté qui est supérieur à un degré d'incertitude pour des valeurs de champs dans un CAM pour un véhicule connecté (210, 211, 610).

13. Appareil selon l'une quelconque des revendications précédentes, dans lequel le degré d'incertitude supérieur pour les valeurs des champs dans le CAM pour le véhicule non connecté (220, 221) indique des degrés d'incertitude supérieurs pour au moins l'un parmi un emplacement, une vitesse, un cap, une direction, un cap, une accélération, une courbure ou un lacet du véhicule non connecté (220, 221).

14. Appareil selon l'une quelconque des revendications précédentes, dans lequel le processeur (655) est configuré pour déterminer le degré d'incertitude sur la base d'informations dans le CAM qui représentent une exactitude ou une précision des valeurs dans les champs du CAM.

15. Appareil selon l'une quelconque des revendications précédentes, dans lequel l'appareil est mis en œuvre dans un véhicule connecté (210, 211, 610), et dans lequel le processeur (655) est configuré pour modifier un comportement du véhicule connecté (210, 211, 610) sur la base du degré d'incertitude supérieur pour les valeurs des champs dans le CAM pour le véhicule non connecté (220, 221).
